# EUROPEAN PATENT SPECIFICATION

(11) **EP 2 811 359 B1**
(45) Date of publication and mention of the grant of the patent: **08.08.2018**
(21) Application number: 13382217.1
(22) Date of filing: 06.06.2013
(51) Int. Cl.: G05D 1/08

(54) **Method and system for aircraft speed control**
Vorrichtung und Verfahren zur Geschwindigkeitssteuerung eines Flugzeugs
Procédé et système de commande de vitesse de un'aéronef

(43) Date of publication of application: 10.12.2014
(73) Proprietor: The Boeing Company, Chicago, IL 60606-1596 (US)
(72) Inventor: D'Alto, Luis Pedro, 28007 Madrid (ES)
(74) Representative: Boult Wade Tennant

(56) References cited:
- US-A- 4 609 987
- US-A- 4 609 988
- US-A- 5 826 834
- US-A1- 2010 042 270

## Description

The invention relates to methods and systems for controlling the speed of an aircraft. The methods and systems disclosed herein are particularly advantageous for unmanned aerial vehicles.

For correct operation of an aircraft, its airspeed must be held between upper and lower limits. Above the upper limit, the airspeed of an aircraft may cause structural damage. Below the lower limit, the airspeed of an aircraft may be insufficient and the aircraft may stall. Limits imposed on aircraft typically incorporate some sort of safety factor and do not therefore correspond exactly to the speed at which structural damage or stall may occur.

Conventional systems for ensuring that aircraft operate within these limits involve manipulating either the inputs or the outputs of controllers for controlling the control surfaces or engines of the aircraft. Such manipulation involves complex "limit prediction" methods for predicting when an airspeed limit will be broken and/or "limit avoidance" methods for determining a change in the inputs or outputs of the controllers.

The invention can provide simpler and more reliable methods and systems for ensuring the safe operation of aircraft.

US2010/0042270 and US4609988 disclose control systems for aircraft pitch control.

According to a first aspect of the invention, there is provided a system for controlling the speed of an aircraft, comprising: at least one outer-loop controller (21), wherein the/each outer-loop controller (21) is arranged to receive one or more target flight variables (11) and to output a nominal target pitch; an inner-loop controller (40) arranged to receive a target pitch and output a control signal (50) for controlling at least one aircraft control device; and a saturation module (100) arranged to receive the nominal target pitch and to output a target pitch for the inner-loop controller (40), wherein the nominal target pitch is limited between an upper bound and a lower bound by the saturation module (100) to generate the target pitch, characterised in that:
the lower bound is calculated based on a difference between the current airspeed and a maximum permitted airspeed; or
the upper bound is calculated based on a difference between the current airspeed and a minimum permitted airspeed.

According to a second aspect of the invention, there is provided a method for controlling the pitch of an aircraft, comprising: defining an upper bound for a target pitch; defining a lower bound for a target pitch; receiving one or more target flight variables (11); calculating a nominal target pitch from the one or more target variables; applying the upper bound and the lower bound to limit the nominal target pitch to generate a target pitch; and calculating a control signal for controlling at least one aircraft control device from the target pitch, characterised in that:
defining an lower bound for a target pitch comprises calculating the lower bound based on a difference between the current airspeed and a maximum permitted airspeed; or
defining a upper bound for a target pitch comprises calculating the upper bound based on a difference between the current airspeed and a minimum permitted airspeed.

For a better understanding of the invention and to show how the same may be put into effect, reference will now be made, by way of example only, to the accompanying drawings in which:
Figure 1 shows a prior art system for controlling the pitch of an aircraft; and
Figure 2 shows an embodiment of a system of the invention for controlling the pitch of an aircraft.

Aircraft can vary in configuration, for example by movement of flaps or slats. For each configuration, an aircraft has an associated maximum airspeed that defines the greatest speed, relative to the body of air through which it is travelling, at which the aircraft can travel safely - for example, higher speeds may cause structural damage and/or result in adverse aerodynamic effects such as buffeting, or hinder the aircraft from manoeuvring effectively. The phrase maximum airspeed for the aircraft as used hereinafter means the maximum airspeed corresponding to the configuration of the aircraft at the relevant time. For safety reasons, it is often preferred to define a maximum permitted airspeed as being less than the true maximum airspeed by a suitable safety factor.

For each configuration, an aircraft will also have an associated minimum manoeuvring airspeed that defines the lowest speed, relative to the body of air through which the aircraft is travelling, at which the aircraft can manoeuvre safely without stalling. The phrase minimum manoeuvring airspeed for the aircraft as used hereinafter means the minimum manoeuvring airspeed corresponding to the configuration of the aircraft at the relevant time. For safety reasons, it is often preferred to define a minimum permitted airspeed as being higher than the true minimum manoeuvring airspeed by a suitable safety factor.

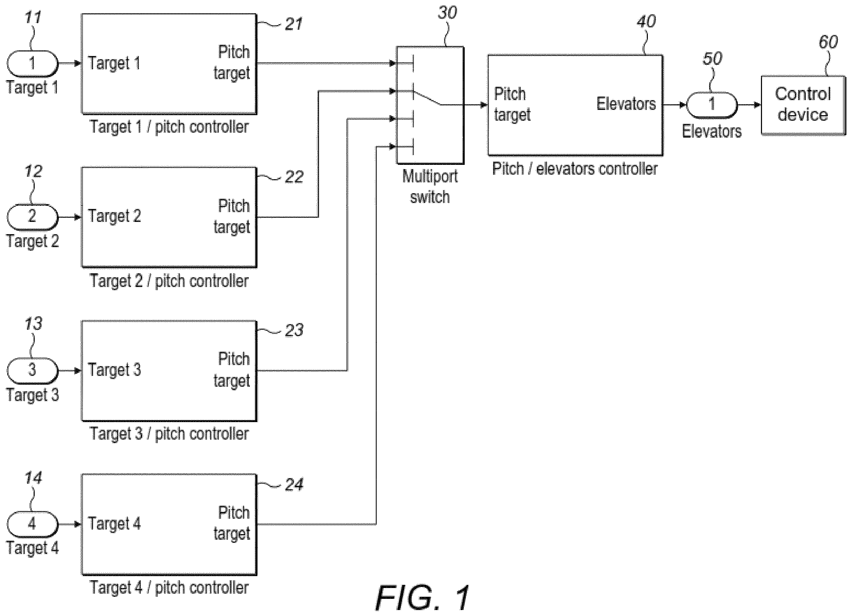

As shown in Figure 1, conventionally, a system for controlling the pitch of an aircraft will include a plurality of outer-loop controllers 21, 22, 23, 24 and an inner-loop controller 40.

The inner-loop controller 40 receives a pitch target and calculates how to manipulate one or more control devices 60 of the aircraft to achieve the target pitch. Preferably, the control device 60 is a movable control surface, such as an elevator.

The inner-loop controller 40 generates a control signal 50 (e.g. for controlling an elevator) based upon the pitch target provided by an outer-loop controller 21, 22, 23, 24.

Each outer-loop controller 21, 22, 23, 24 receives an input 11, 12, 13, 14. The input 11, 12, 13, 14 may be set by a pilot, or by a predetermined flight plan, and indicate the desired flight variables (such as altitude, flight path angle, airspeed, vertical speed, etc.) to be achieved.

Each outer-loop controller 21, 22, 23, 24 calculates the pitch target to output to the inner-loop controller 40.

A switch 30 selects which outer-loop controller 21, 22, 23, 24 instructs the inner-loop controller 40.

Each outer-loop controller 21, 22, 23, 24 will be responsible for determining a target pitch for a particular phase of a flight plan. For example, outer-loop controller 21 may be responsible for controlling pitch during ascent, while outer-loop controller 22 may be responsible for controlling pitch during descent, etc.

For correct operation, the airspeed of an aircraft must be held between upper and lower limits. Above the upper limit, the airspeed of an aircraft may cause structural damage. Below the lower limit, the airspeed of an aircraft may be insufficient and the aircraft may stall. Limits imposed on aircraft typically incorporate some sort of safety factor and do not therefore correspond exactly to the speed at which structural damage or stall may occur.

Conventional systems for ensuring that aircraft operate within these limits involve manipulating either the inputs 11, 12, 13, 14 to the control system, or the control signal 50 output by the inner-loop controller 40. Such manipulation involves complex "limit prediction" methods for predicting when an airspeed limit will be broken and/or "limit avoidance" methods for determining a change in the inputs 11, 12, 13, 14 and/or the control signal 50.

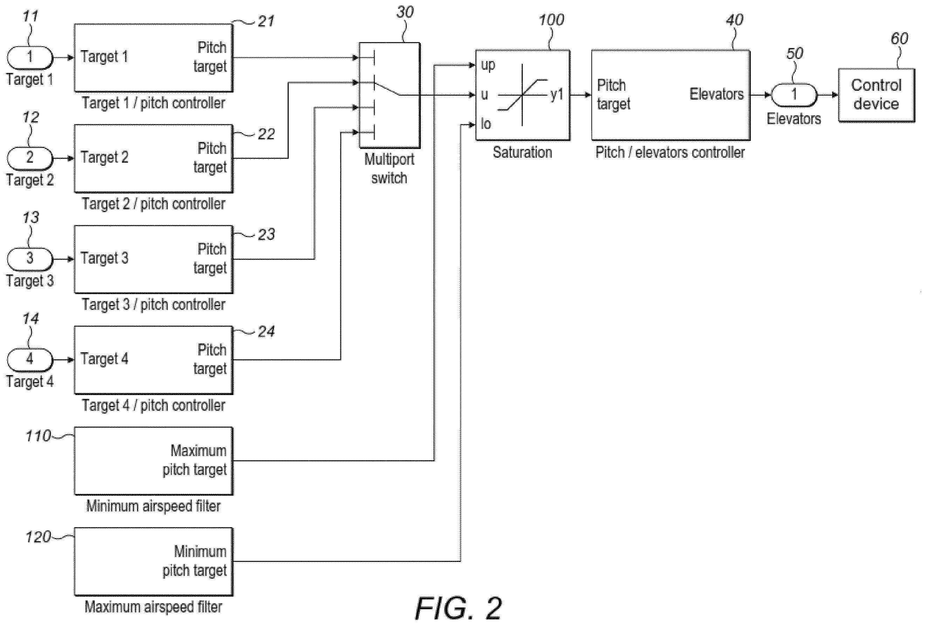

Figure 2 shows an embodiment of the invention in which safe operation of an aircraft may be achieved by limiting the pitch target output by each of the outer-loop controllers 21, 22, 23, 24.

Preferably, this limitation is achieved by the use of saturation module 100.

As with the prior art, the embodiment includes one or more outer-loop controllers 21, 22, 23, 24 and an inner-loop controller 40. When a plurality of outer-loop controllers 21, 22, 23, 24 are provided, a switch 30 may be provided to select the outer-loop controller 21, 22, 23, 24.

The system may be arranged such that the outer-loop controllers 21, 22, 23, 24 provide pitch targets to the inner-loop controller 40 via the saturation module 100.

Saturation module 100 may receive an input from the outer-loop controllers 21, 22, 23, 24, and provide an output of a pitch target to the input of inner-loop control 40. When a switch 30 is provided, the saturation module may be located at the output of the switch 30, or a saturation module 100 may be located at the output of each outer-loop controller 21, 22, 23, 24.

The saturation module 100 may compare the received pitch target from the outer-loop controllers 21, 22, 23, 24 with an upper pitch bound and a lower pitch bound, and provide an output of a pitch target that is limited by the upper pitch bound and the lower pitch bound.

That is, if the received pitch target from the outer-loop controllers 21, 22, 23, 24 exceeds the upper pitch bound then the saturation module 100 will output a pitch target to the inner-loop controller 40 equal to the upper bound.

If the received pitch target from the outer-loop controllers 21, 22, 23, 24 is below the lower pitch bound then the saturation module 100 will output to the inner-loop controller 40 a pitch target equal to the lower bound.

If the received pitch target from the outer-loop controllers 21, 22, 23, 24 is between the upper pitch bound and the lower pitch bound then the saturation module 100 will output to the inner-loop controller 40 a pitch target equal to that received from the outer-loop controllers 21, 22, 23, 24.

The upper pitch bound and the lower pitch bound may be calculated using one or more airspeed filters.

Specifically, the upper pitch bound may be calculated using a minimum airspeed filter 110, and the lower pitch bound may be calculated using a maximum airspeed filter 120.

Preferably, the maximum airspeed filters 120 may receive an input signal representative of the difference between the current airspeed and the maximum permitted airspeed, and provide an output signal that is a function of the input signal.

Preferably, the minimum airspeed filters 110 may receive an input signal representative of the difference between the current airspeed and the minimum permitted airspeed, and provide an output signal that is a function of the input signal.

In preferable embodiments, the airspeed filters 110, 120 apply a function comprising one or more of: a term proportional to the input signal; and a term proportional to the derivative of the input signal.

For example, the function may be a sum or a weighted sum of the terms.

The airspeed filters 110, 120 described above comprise proportional-derivative filters. However, this is not essential. Any form of linear and non-linear filter can be used. However, linear filters are generally preferred. Most preferably, the airspeed filters 110, 120 may comprise linear filters with no integral effect. For example, the airspeed filters 110, 120 may comprise "lead-lag" controllers having no poles at the origin.

Any form of controller may be suitable for use as an outer-loop controller 21, 22, 23, 24. In preferred embodiments, one or more of the outer-loop controllers 21, 22, 23, 24 may comprise a PID controller. As is known in the art, correct operation of PID controllers can be hindered by actuator saturation whereby the magnitude of a control signal from a controller exceeds that achievable by an actuator. This could occur in some embodiments because the ability of the outer-loop controllers 21, 22, 23, 24 to control the aircraft pitch is hindered by the one or more airspeed filters. In other words, the nominal output of the outer-loop controllers 21, 22, 23, 24 may become unstable due to the indirect nature of their control over the aircraft. Whilst not essential, a technique called "wind-up compensation" may be used to compensate for such saturation. Wind-up compensation is a well known technique in which the output of the integrator is limited to prevent the control signal from causing actuator saturation. Embodiments are therefore envisaged in which outer-loop controllers 21, 22, 23, 24 incorporate wind-up compensation.

## Claims

1. A system for controlling the speed of an aircraft, comprising:
at least one outer-loop controller (21), wherein the/each outer-loop controller (21) is arranged to receive one or more target flight variables (11) and to output a nominal target pitch;
an inner-loop controller (40) arranged to receive a target pitch and output a control signal (50) for controlling at least one aircraft control device; and
a saturation module (100) arranged to receive the nominal target pitch and to output a target pitch for the inner-loop controller (40),
wherein the nominal target pitch is limited between an upper bound and a lower bound by the saturation module (100) to generate the target pitch,
**characterised in that**:
the lower bound is calculated based on a difference between the current airspeed and a maximum permitted airspeed; or
the upper bound is calculated based on a difference between the current airspeed and a minimum permitted airspeed.

2. The system of claim 1, comprising a plurality of outer-loop controllers (21, 22, 23, 24), and a switch (30) for selecting a selected nominal target pitch from the nominal target pitch provided by each outer-loop controller (21, 22, 23, 24), wherein the saturation module (100) is arranged to receive the selected nominal target pitch.

3. The system of any preceding claim, comprising a maximum airspeed filter (120) for calculating the lower bound.

4. The system of claim 3, wherein the maximum airspeed filter (120) comprises a linear filter with no integral effect.

5. The system of any preceding claim, comprising a minimum airspeed filter (110) for calculating the upper bound.

6. The system of claim 5, wherein the minimum airspeed filter (110) comprises a linear filter with no integral effect.

7. A method for controlling the pitch of an aircraft, comprising:
defining an upper bound for a target pitch;
defining a lower bound for a target pitch;
receiving one or more target flight variables (11);
calculating a nominal target pitch from the one or more target variables;
applying the upper bound and the lower bound to limit the nominal target pitch to generate a target pitch;and
calculating a control signal for controlling at least one aircraft control device from the target pitch,
**characterised in that**:
defining an lower bound for a target pitch comprises calculating the lower bound based on a difference between the current airspeed and a maximum permitted airspeed; or
defining a upper bound for a target pitch comprises calculating the upper bound based on a difference between the current airspeed and a minimum permitted airspeed.

8. The method of claim 7, comprising:
calculating a plurality of nominal target pitches from the one or more target variables; and
selecting a selected nominal target pitch from the plurality of nominal target pitches,
wherein the step of applying an upper bound and a lower bound to limit the nominal target pitch to generate a target pitch comprises applying an upper bound and a lower bound to limit the selected nominal target pitch to generate a target pitch.

9. The method of claim7 or claim 8, comprising calculating the lower bound using a maximum airspeed filter (120).

10. The method of any one of claims 7 to 9, comprising calculating the lower bound using a linear filter with no integral effect.

11. The method of any one of claims 7 to 10, comprising calculating the upper bound using a minimum airspeed filter (110) .

12. The method of any one of claims 7 to 11, comprising calculating the upper bound using a linear filter with no integral effect.

## Patentansprüche

1. System zum Geschwindigkeitssteuerung eines Luftfahrzeugs, das umfasst:
mindestens eine äußere Regelschleife (21), wobei die/jede äußere Regelschleife (21) dafür eingerichtet ist, eine oder mehrere Zielflugvariable (11) zu empfangen und einen nominellen Ziel-Nick auszugeben;
eine innere Regelschleife (40), die dafür eingerichtet ist, einen Ziel-Nick zu empfangen und ein Steuerungssignal (50) zum Steuern von mindestens einer Luftfahrzeugsteuerungseinrichtung auszugeben; und
ein Sättigungsmodul (100), das dafür eingerichtet ist, den nominellen Ziel-Nick zu empfangen und einen Ziel-Nick für die innere Regelschleife (40) auszugeben,
wobei für das Erzeugen des Ziel-Nicks der nominelle Ziel-Nick durch das Sättigungsmodul (100) zwischen einer oberen Grenze und einer unteren Grenze begrenzt wird;
**dadurch gekennzeichnet, dass**
die untere Grenze auf der Basis einer Differenz zwischen der aktuellen Airspeed und einer maximal zulässigen Airspeed berechnet wird; oder
die obere Grenze auf der Basis einer Differenz zwischen der aktuellen Airspeed und einer minimal zulässigen Airspeed berechnet wird.

2. System nach Anspruch 1, das eine Vielzahl von äußeren Regelschleifen (21, 22, 23, 24) und einen Schalter (30) für das Auswählen eines ausgewählten nominellen Ziel-Nicks von dem nominellen Ziel-Nick umfasst, der von jeder äußeren Regelschleife (21, 22, 23, 24) bereitgestellt wird, wobei das Sättigungsmodul (100) dafür eingerichtet ist, den ausgewählten nominellen Ziel-Nick zu empfangen.

3. System nach einem beliebigen vorhergehenden Anspruch, das ein Maximal-Airspeed-Filter (120) für das Berechnen der unteren Grenze umfasst.

4. System nach Anspruch 3, wobei das Maximal-Airspeed-Filter (120) ein lineares Filter ohne Integralwirkung umfasst.

5. System nach einem beliebigen vorhergehenden Anspruch, das ein Minimal-Airspeed-Filter (110) für das Berechnen der oberen Grenze umfasst.

6. System nach Anspruch 5, wobei das Minimal-Airspeed-Filter (110) ein lineares Filter ohne Integralwirkung umfasst.

7. Verfahren zum Steuern des Nicks eines Luftfahrzeugs, das umfasst:
Festlegen einer oberen Grenze für einen Ziel-Nick;
Festlegen einer unteren Grenze für einen Ziel-Nick;
Empfangen von einer oder mehreren Zielflugvariablen (11);
Berechnen eines nominellen Ziel-Nicks aus der einen oder den mehreren Zielvariablen;
Anwenden der oberen Grenze und der unteren Grenze, um den nominellen Ziel-Nick für das Erzeugen eines Ziel-Nicks zu begrenzen; und
Berechnen eines Steuerungssignals zum Steuern von mindestens einer Luftfahrzeugsteuerungseinrichtung von dem Ziel-Nick,
**dadurch gekennzeichnet, dass**:
das Festlegen einer unteren Grenze für einen Ziel-Nick das Berechnen der unteren Grenze auf der Basis einer Differenz zwischen der aktuellen Airspeed und einer maximal zulässigen Airspeed umfasst; oder
das Festlegen einer oberen Grenze für einen Ziel-Nick das Berechnen der oberen Grenze auf der Basis einer Differenz zwischen der aktuellen Airspeed und einer minimal zulässigen Airspeed umfasst.

8. Verfahren nach Anspruch 7, das umfasst:
Berechnen einer Vielzahl von nominellen Ziel-Nicks aus der einen oder den mehreren Zielvariablen; und
Auswählen eines ausgewählten nominellen Ziel-Nicks aus der Vielzahl von nominellen Ziel-Nicks,
wobei der Schritt des Anwendens einer oberen Grenze und einer unteren Grenze zum Begrenzen des nominellen Ziel-Nicks für das Erzeugen eines Ziel-Nicks das Anwenden einer oberen Grenze und einer unteren Grenze zum Begrenzen des ausgewählten nominellen Ziel-Nicks für das Erzeugen eines Ziel-Nicks umfasst.

9. Verfahren nach Anspruch 7 oder Anspruch 8, das das Berechnen der unteren Grenze unter Verwendung eines Maximal-Airspeed-Filters (120) umfasst.

10. Verfahren nach einem der Ansprüche 7 bis 9, das das Berechnen der unteren Grenze unter Verwendung eines linearen Filters ohne Integralwirkung umfasst.

11. Verfahren nach einem der Ansprüche 7 bis 10, das das Berechnen der oberen Grenze unter Verwendung eines Minimal-Airspeed-Filters (110) umfasst.

12. Verfahren nach einem der Ansprüche 7 bis 11, das das Berechnen der oberen Grenze unter Verwendung eines linearen Filters ohne Integralwirkung umfasst.

## Revendications

1. Système de commande de la vitesse d'un avion comprenant :
au moins un dispositif de commande de boucle extérieure (21), dans lequel le/chaque dispositif de commande de boucle extérieure (21) est conçu pour recevoir une ou plusieurs variables de vol cibles (11) et pour délivrer en sortie un tangage cible nominal ;
un dispositif de commande de boucle intérieure (40) conçu pour recevoir un tangage cible et délivrer en sortie un signal de commande (50) pour commander au moins un dispositif de commande d'avion ; et
un module de saturation (100) conçu pour recevoir le tangage cible nominal et pour délivrer en sortie un tangage cible pour le dispositif de commande de boucle intérieure (40),
dans lequel le tangage cible nominal est limité entre une limite supérieure et une limite inférieure par le module de saturation (100) pour générer le tangage cible,
**caractérisé en ce que** :
la limite inférieure est calculée sur la base d'une différence entre la vitesse relative actuelle et la vitesse relative maximale autorisée ; ou
la limite supérieure est calculée sur la base d'une différence entre la vitesse relative actuelle et une vitesse relative minimale autorisée.

2. Système selon la revendication 1, comprenant une pluralité de dispositifs de commande de boucle extérieure (21, 22, 23, 24), et un commutateur (30) pour sélectionner un tangage cible nominal sélectionné à partir du tangage cible nominal fourni par chaque dispositif de commande de boucle extérieure (21, 22, 23, 24), dans lequel le module de saturation (100) est conçu pour recevoir le tangage cible nominal sélectionné.

3. Système selon l'une quelconque des revendications précédentes, comprenant un filtre de vitesse relative maximale (120) pour calculer la limite inférieure.

4. Système selon la revendication 3, dans lequel le filtre de vitesse relative maximale (120) comprend un filtre linéaire sans effet intégral.

5. Système selon l'une quelconque des revendications précédentes, comprenant un filtre de vitesse relative minimale (110) pour calculer la limite supérieure.

6. Système selon la revendication 5, dans lequel le filtre de vitesse relative minimale (110) comprend un filtre linéaire sans effet intégral.

7. Procédé de commande du tangage d'un avion, comprenant les étapes consistant à :
définir une limite supérieure pour un tangage cible ;
définir une limite inférieure pour un tangage cible ;
recevoir une ou plusieurs variables de vol cibles (11) ;
calculer un tangage cible nominal à partir des une ou plusieurs variables cibles ;
appliquer la limite supérieure et la limite inférieure pour limiter le tangage cible nominal afin de générer un tangage cible ; et
calculer un signal de commande pour commander au moins un dispositif de commande d'avion à partir du tangage cible,
**caractérisé en ce que** :
la définition d'une limite inférieure pour un tangage cible comprend le calcul de la limite inférieure sur la base d'une différence entre la vitesse relative actuelle et une vitesse relative maximale autorisée ; ou
la définition d'une limite supérieure pour un tangage cible comprend le calcul de la limite supérieure sur la base d'une différence entre la vitesse relative actuelle et une vitesse relative minimale autorisée.

8. Procédé selon la revendication 7, comprenant les étapes consistant à :
calculer une pluralité de tangages cibles nominaux à partir des une ou plusieurs variables cibles ; et
sélectionner un tangage cible nominal sélectionné parmi la pluralité de tangages cibles nominaux,
dans lequel l'étape d'application d'une limite supérieure et d'une limite inférieure pour limiter le tangage cible nominal afin de générer un tangage cible comprend l'application d'une limite supérieure et d'une limite inférieure pour limiter le tangage cible nominal sélectionné afin de générer un tangage cible.

9. Procédé selon la revendication 7 ou la revendication 8, comprenant le calcul de la limite inférieure en utilisant un filtre de vitesse relative maximale (120).

10. Procédé selon l'une quelconque des revendications 7 à 9, comprenant le calcul de la limite inférieure en utilisant un filtre linéaire sans effet intégral.

11. Procédé selon l'une quelconque des revendications 7 à 10, comprenant le calcul de la limite supérieure en utilisant un filtre de vitesse relative minimale (110).

12. Procédé selon l'une quelconque des revendications 7 à 11, comprenant le calcul de la limite supérieure en utilisant un filtre linéaire sans effet intégral.
